# EUROPEAN PATENT SPECIFICATION

(11) **EP 3 399 725 B1**
(45) Date of publication and mention of the grant of the patent: **16.12.2020**
(21) Application number: 16806853.4
(22) Date of filing: 08.06.2016
(51) Int. Cl.: H04L 29/12, H04L 29/06, G06F 9/455, H04L 12/18, G06F 9/451

(54) **MULTIMEDIA STREAM MULTICASTING METHOD AND DEVICE**
MULTIMEDIA-STREAM-MULTICAST-VERFAHREN UND -VORRICHTUNG
PROCÉDÉ ET DISPOSITIF DE MULTIDIFFUSION DE FLUX MULTIMÉDIA

(30) Priority: 28.12.2015 CN 201510999545
(43) Date of publication of application: 07.11.2018
(73) Proprietor: ZTE Corporation, Shenzhen, Guangdong 518057 (CN)
(72) Inventor: LUO, Wen, Shenzhen Guangdong 518057 (CN)
(74) Representative: Iannone, Carlo Luigi
(86) International application number: PCT/CN2016/085332
(87) International publication number: WO 2016/197955

(56) References cited:
- CN-A- 101 237 340
- CN-A- 101 247 541
- CN-A- 102 833 330
- CN-A- 103 973 721
- JP-A- 2006 148 654
- US-A1- 2015 003 313

## Description

### FIELD OF THE INVENTION

This application relates to, but is not limited to, the field of communications, and in particular to a multimedia stream multicasting method and device.

### BACKGROUND

With the popularity of thin terminals, thin terminals are often used to demonstrate relevant contents in education, conferences, and speeches. To facilitate sharing by users, it is usually necessary to multicast the virtual desktop content of a certain end to multiple recipients so as to meet the real-time propagation of the demonstration content.

The thin terminal desktop content sharing in related art is usually implemented by installing certain multimedia sharing software in the virtual desktop environment of sending and receiving sides, respectively, and using the multimedia multicast function of the software. In this regard, virtual desktop systems on the sending and receiving sides run the multimedia sharing software at the same time. The sending side initiates a multicast network broadcast through the software. After receiving a broadcast message, the software on the receiving side in the same LAN selects whether to join the multicast group based on the user. After the networking is completed, audio/video encoding and decoding of the multimedia content to be shared will be perform through the sharing software and then multicast in the network on the sending side. After receiving the multicast multimedia information, the sharing software on receiving side decodes and plays the audio and video. After the content of the virtual desktop system is changed and refreshed, the desktop content is transmitted back to the thin terminal and refreshed by a relevant virtualization protocol, thereby completing the sharing of the desktop content.

U.S. Patent Application Publication No. 20150003313A1 relates to a presenter device for screen sharing of a remote desktop on a remote server with participant devices. The presenter device connects to the remote desktop through a wireless network, receives screen data of the remote desktop and transmits multicast packets carrying the screen data and multicast address to a multicast group. In such a manner, the participant devices can display the screen data from the multicast packets.

### SUMMARY

Hereinafter a summary of the subject matter will be described in detail. This summary is not intended to limit the scope of the claims.

During the research process, it has been found that this desktop sharing solution has the following problems: the sending side multicasts the multimedia content through the sharing software, and the receiving side needs to use the sharing software to play in the virtual desktop system after receiving the relevant information, and then refreshes to present the changed desktop content in the thin terminal through relevant desktop virtualization protocols. The same multimedia content needs to be repeatedly presented in the virtual desktop and the thin terminal. As a result, a lot of network resources may be wasted, a high soft switch performance of a virtual switch is required, and the central processing unit (CPU) of the virtual machine at the receiving end consumes a large amount of resources, probably causing that the virtual desktop plays discontinuously or even cannot normally work. Therefore, the user experience is inferior, and the supported multicasting desktop on the receiving side is limited.

Herein, there is provided a method related to a system, as further defined in claim 1, a method related to receiving end, as further defined in claim 5, a multimedia stream multicasting device applicable to a sending end, as further defined in claim 10, a multimedia stream multicasting device applicable to a sending end, as further defined in claim 12, and a multimedia stream multicasting device applicable to a receiving end, as further defined in claim 13, to at least solve the problem that a great amount of resource consumption of the virtual machine is caused by the multicasting of the multimedia stream in the related art.

Other aspects can be understood after reading and understanding the drawings and detailed description.

### BRIEF DESCRIPTION OF THE DRAWINGS

FIG. 1 is a first flowchart of a multimedia stream multicasting method according to an embodiment of the present disclosure;
FIG. 2 is a second flowchart of a multimedia multicasting method according to an embodiment of the present disclosure;
FIG. 3 is a first block diagram of a multimedia multicasting device according to an embodiment of the present disclosure;
FIG. 4 is a second block diagram of a multimedia multicasting device according to an embodiment of the present disclosure;
FIG. 5 is a third block diagram of a multimedia multicasting device according to an embodiment of the present disclosure;
FIG. 6 is a processing flowchart of a multicast sending module according to an optional embodiment of the present disclosure;
FIG. 7 is a processing flowchart of a multicast proxy and receiving module according to an optional embodiment of the present disclosure;
FIG. 8 is a block diagram of a desktop multicast sharing device according to an optional embodiment of the present disclosure
FIG. 9 is an operation flowchart of a desktop multicast sharing device according to an optional embodiment of the present disclosure;
FIG. 10 is a schematic flowchart of a multicast sharing method of a cloud desktop according to an optional embodiment of the present disclosure; and
FIG. 11 is a schematic flowchart of a multicast sharing method of a thin terminal desktop according to an optional embodiment of the present disclosure.

### DETAILED DESCRIPTION OF THE EMBODIMENTS

Hereinafter, embodiments of the present disclosure will be described in detail with reference to the accompanying drawings and in conjunction with the embodiments. It should be noted that the embodiments in the present disclosure and the features in the embodiments can be combined with each other without conflict.

It should be noted that the terms "first", "second", and the like in the specification and claims and the above accompanying drawings herein are intended to distinguish similar objects and do not necessarily describe a specific sequence or priority.

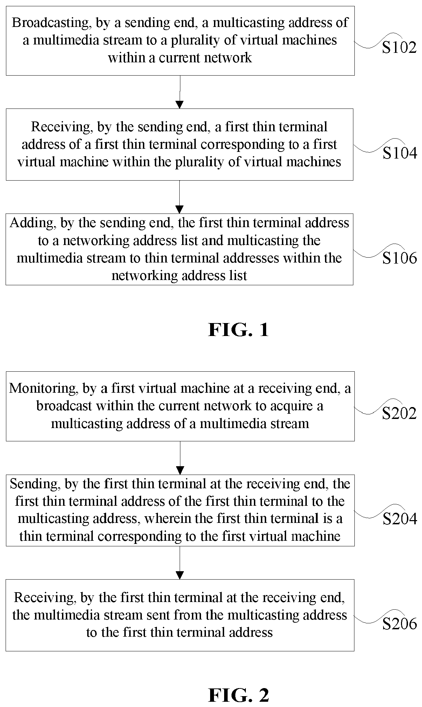

In this embodiment, there is provided a multimedia stream multicasting method. FIG. 1 is a flowchart of a multimedia stream multicasting method according to this embodiment of the present disclosure. As shown in FIG. 1, the process comprises steps of:
Step S102: broadcasting, by a sending end, a multicasting address of a multimedia stream to a plurality of virtual machines within a current network;
Step S104: receiving, by the sending end, a first thin terminal address of a first thin terminal corresponding to a first virtual machine within the plurality of virtual machines; and
Step S106: adding, by the sending end, the first thin terminal address to a networking address list and multicasting the multimedia stream to thin terminal addresses within the networking address list.

Through the above steps, the multimedia stream is multicast to the first thin terminal of the first virtual machine, such that the multimedia stream can be decoded in the first thin terminal. That is, the multimedia stream multicasting can be decoded directly with the convenience of hardware resource of the thin terminal, thereby solving the problem of a great amount of resource consumption of virtual machine caused by the decoding of the multimedia stream by the virtual machine and reducing the resource consumption of processing the multimedia stream multicasting by the virtual machine.

In an embodiment of the present disclosure, the multimedia stream may be multicast by a second virtual machine at the sending end or may be multicast by a second thin terminal in the second virtual machine. In this regard, the use of the second thin terminal for multicasting may reduce the resource consumption of the second virtual machine at the sending end.

As an example, at Step S102, the second virtual machine at the sending end broadcasts the virtual machine address of the second virtual machine to the plurality of virtual machines within the current network, wherein the virtual machine address of the second virtual machine is a multicasting address. At Step S106, the second virtual machine at the sending end multicasts the multimedia stream to the thin terminal addresses in the networking address list.

As another example, at Step S102, the second virtual machine at the sending end acquires a second thin terminal address of the second thin terminal corresponding to the second virtual machine; and the second virtual machine at the sending end broadcasts the second thin terminal address to the plurality of virtual machines within the current network, wherein the second thin terminal address is a multicasting address. At Step S106, the second thin terminal at the sending end multicasts the multimedia stream to the thin terminal addresses in the networking address list.

Optionally, prior to Step S102, the second virtual machine at the sending end may initiate a desktop sharing program and join the current network through the desktop sharing program. In this manner, the plurality of virtual machines requiring multimedia stream multicasting may establish a broadcasting network and broadcast the multicasting addresses through the broadcasting network.

After the sending end multicasts the multimedia stream to the thin terminal addresses within the networking address list, the first thin terminal receives the multimedia stream. The first thin terminal decodes the multimedia stream and updates a display screen of the first virtual machine according to a decoded multimedia stream.

In an embodiment, there is provided a multimedia multicasting method. FIG. 2 is a second flowchart of a multimedia multicasting method according to the embodiment of the present disclosure. As shown in FIG. 2, the process comprises steps of:
Step S202: monitoring, by a first virtual machine at a receiving end, a broadcast within the current network to acquire a multicasting address of a multimedia stream;
Step S204: sending, by the first thin terminal at the receiving end, the first thin terminal address of the first thin terminal to the multicasting address, wherein the first thin terminal is a thin terminal corresponding to the first virtual machine; and
Step S206: receiving, by the first thin terminal at the receiving end, the multimedia stream sent from the multicasting address to the first thin terminal address.

Through the above steps, the multimedia stream can be decoded in the first thin terminal. That is, the multimedia stream multicasting can be decoded directly with the convenience of hardware resource of the thin terminal, thereby solving the problem of a great amount of resource consumption of virtual machine caused by the decoding of the multimedia stream by the virtual machine and reducing the resource consumption of processing the multimedia stream multicasting by the virtual machine.

Optionally, after the first virtual machine at the receiving end monitors the broadcast within the current network to acquire the multicasting address of the multimedia stream, and before the first thin terminal at the receiving end sends the first thin terminal address of the first thin terminal to the multicasting address, the method further comprises: transparently transmitting, by the first virtual machine at the receiving end, the multicasting address to the first thin terminal.

Optionally, the multimedia stream may be multicast by the second virtual machine at the sending end or may be multicast by the second thin terminal corresponding to the second virtual machine at the sending end.

As an example, in the case that the multicasting address is a virtual machine address of the second virtual machine at the sending end of the multimedia stream, at Step S206, the first thin terminal at the receiving end receives the multimedia stream sent from the second virtual machine to the first thin terminal.

As another example, in the case that the multicasting address is a second thin terminal address of the second thin terminal corresponding to the second virtual machine at the sending end of the multimedia stream, at Step S206, the first thin terminal at the receiving end receives the multimedia stream sent from the second virtual machine to the first thin terminal.

Optionally, prior to S202, the first virtual machine at the receiving end may initiate a desktop sharing program and join the current network through the desktop sharing program. In this manner, the plurality of virtual machines requiring multimedia stream multicasting may establish a broadcasting network and broadcast the multicasting addresses through the broadcasting network.

Optionally, after the first thin terminal at the receiving end receives the multimedia stream sent from the multicasting address to the first thin terminal address, the first thin terminal decodes the multimedia stream and updates a display screen of the first virtual machine according to a decoded multimedia stream. Thus, the decoding of the multimedia stream on the first thin terminal can be realized.

Through the description of the above embodiments, those skilled in the art can clearly understand that the method according to the above embodiment can be implemented by means of software plus a necessary general hardware platform. Of course, this can be implemented by the hardware, but the former is a better implementation in many cases. Based on such understanding, the technical solutions of the embodiments of the present disclosure may be embodied in the form of a software product stored in a storage medium (such as, a ROM/RAM, a magnetic disk, an optical disk), including a plurality of instructions such that a terminal device (may be a mobile phone, a computer, a server, or a network device, etc.) performs the method described in the embodiments of the present disclosure.

In an embodiment, there is also provided a multimedia multicasting device applicable to a sending end. The device is used to implement the foregoing embodiments and implementations, and the description thereof will be omitted.

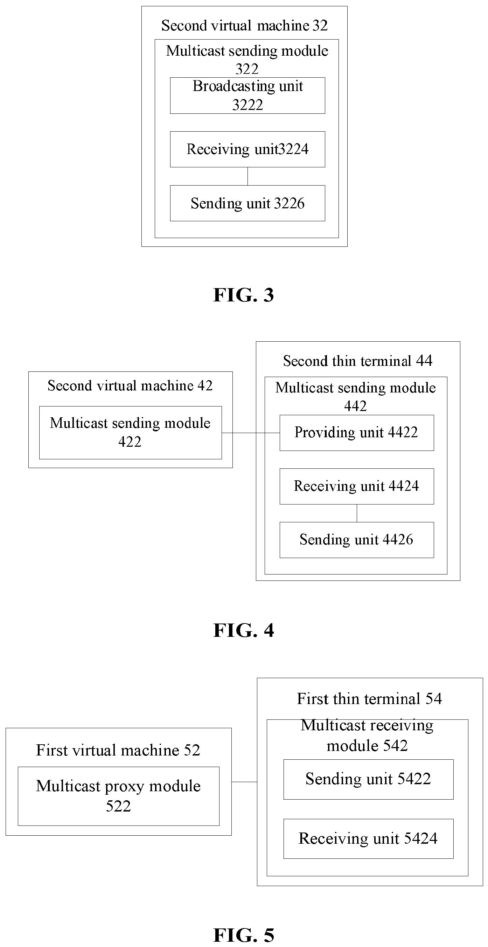

FIG. 3 is a first block diagram of a multimedia multicasting device according to an embodiment of the present disclosure. As shown in FIG. 3, the device comprises: a second virtual machine 32 including a first multicast sending module 322, wherein the first multicast sending module 322 includes a broadcasting unit 3222 configured to broadcast a multicasting address of a multimedia stream to a plurality of virtual machines within a current network, wherein the multicasting address is a virtual machine address of a second virtual machine; a first receiving unit 3224 configured to receive a first thin terminal address of a first thin terminal corresponding to a first virtual machine in the plurality of virtual machines; and a first sending unit 3226 coupled to the first receiving unit 3224 and configured to add the first thin terminal address to a networking address list and multicast the multimedia stream to thin terminal addresses in the networking address list.

Optionally, the first multicast sending module 322 further comprises: a first virtual machine access unit coupled to the broadcasting unit 3222 and configured to initiate a desktop sharing program of the second virtual machine and add the second virtual machine to the current network through the desktop sharing program.

In an embodiment, there is also provided a multimedia multicasting device, applicable to a sending end. The device is used to implement the foregoing embodiments and implementations, and the description thereof will be omitted.

FIG. 4 is a second block diagram of a multimedia multicasting device according to an embodiment of the present disclosure. As shown in FIG. 4, the device comprises: a second virtual machine 42 including a second multicast proxy module 422 and a second thin terminal 44 corresponding to the second virtual machine 42 wherein the second multicast proxy module 422 is configured to broadcast the multicasting address of the multimedia stream to a plurality of virtual machines in the current network, wherein the multicasting address is a second thin terminal address of the second thin terminals 44; the second thin terminal 44 includes a second multicast sending module 442, wherein the second multicast sending module 442 includes a providing unit 4422 configured to provide the multicast proxy module with the second thin terminal address; a second receiving unit 4424 configured to receive a first thin terminal address of the first thin terminal corresponding to the first virtual machine within the plurality of virtual machines; and a second sending unit 4426 coupled to the second receiving unit 4424 and configured to add the first thin terminal address to the networking address list and multicast the multimedia stream to thin terminal addresses within the networking address list.

Optionally, the second multicast proxy module 422 further comprises: a second virtual machine access unit, configured to initiate a desktop sharing program of the second virtual machine and add the second virtual machine to the current network through the desktop sharing program.

In an embodiment, there is also provided a multimedia multicasting device, applicable to a receiving end. The device is used to implement the foregoing embodiments and optional implementations, and the description thereof will be omitted.

FIG. 5 is a third block diagram of a multimedia multicasting device according to an embodiment of the present disclosure. As shown in FIG. 5, the device comprises: a first virtual machine 52 including a first multicast proxy module 522 and a first thin terminal 54 corresponding to the first virtual machine 52, wherein the first multicast proxy module 522 is configured to monitor the broadcasting within the current network to acquire a multicasting address of the multimedia stream; the first thin terminal 54 comprises a multicast receiving module 542, wherein the multicast receiving module 542 includes: a third sending unit 5422 configured to send the first thin terminal address of the first thin terminal to the multicasting address; and a third receiving unit 5424 configured to receive the multimedia stream sent from the multicasting address to the first thin terminal address.

Optionally, the first multicast proxy module 522 further comprises: a third virtual machine access unit, configured to initiate a desktop sharing program of the first virtual machine and add the first virtual machine to the current network through the desktop sharing program.

Optionally, the first multicast receiving module 542 further comprises a processing unit coupled to the third receiving unit 5424 and configured to decode the multimedia stream and update a display screen of the first virtual machine according to a decoded multimedia stream.

It should be noted that the foregoing modules may be implemented by software or hardware. The latter may be implemented in such a manner, but not limited to, that the foregoing modules are all located in a single processor, or the foregoing modules are located in multiple processors, respectively.

An embodiment of the present disclosure also provides software for executing the technical solutions described in the above embodiments and implementations.

An embodiment of the present disclosure also provides a storage medium. In this embodiment, the storage medium set forth above may be configured to store program codes for executing steps of:
Step S102: broadcasting, by a sending end, a multicasting address of a multimedia stream to a plurality of virtual machines within a current network;
Step S104: receiving, by the sending end, a first thin terminal address of a first thin terminal corresponding to a first virtual machine within the plurality of virtual machines; and
Step S106: adding, by the sending end, the first thin terminal address to a networking address list and multicasting the multimedia stream to thin terminal addresses within the networking address list.

An embodiment of the present disclosure also provides a storage medium. In this embodiment, the storage medium set forth above may be configured to store program codes for executing steps of:
Step S202: monitoring, by a first virtual machine at a receiving end, the broadcasting within the current network to acquire a multicasting address of a multimedia stream;
Step S204: sending, by the first thin terminal at the receiving end, the first thin terminal address of the first thin terminal to the multicasting address, wherein the first thin terminal is a thin terminal corresponding to the first virtual machine; and
Step S206: receiving, by the first thin terminal at the receiving end, the multimedia stream sent from the multicasting address to the first thin terminal address.

Optionally, in this embodiment, the foregoing storage medium may include but is not limited to a variety of media that can store program codes such as a U disk, a Read-Only Memory (ROM), a Random-Access Memory (RAM), a mobile hard disk, a magnetic disk, or an optical disk.

Optionally, for examples in this embodiment, reference may be made to the examples described in the foregoing embodiments and optional implementations, which are not described herein in this embodiment.

In order that the description of the embodiments of the present disclosure becomes more apparent, the description and description are provided with reference to optional embodiments hereinafter.

An embodiment of the present disclosure provides a method and device for desktop multicast sharing based on a thin terminal, comprising:
In a desktop sharing multicast sending method, the virtual machine at the sending end initiates the desktop sharing program. After the multicast sending module obtains its own virtual machine address information, the virtual machine address information is then converted into a corresponding multicasting address to save and broadcast in the LAN. According to the relevant protocol rules, if a networking request is obtained within the unit time, the networking request is parsed, and after a requested networking address is acquired, the networking address database is updated. After that, the sharing multimedia information is multicast and sent to the addresses in the networking list until the sharing ends. If no networking request is received, whether to re-initiate a broadcast of the multicasting address will be selected as required.

In a desktop sharing multicast proxy and receiving method, the virtual machine at the receiving end initiates the desktop sharing program. The multicast proxy module receives the broadcast of multicasting address and forwards the multicasting address information to a local virtual machine system. The virtual machine system transparently transmits the multicasting address information to the multicast receiving module on the thin terminal through a desktop virtualization protocol. The multicast receiving module obtains the local system address of the thin terminal, packs it into a multicast networking request according to the relevant rules and sends it to the multicast sending module. After the networking is successful, the multicast receiving module will directly initiate a multimedia play module to play the acquired multicast multimedia information. If the networking fails, whether to re-initiate the networking request will be selected as required.

Optionally, the type and definition of the desktop multicast sharing device are described in an explicit or implicit manner.

In order to implement the above desktop sharing multicast sending method, there is provided a desktop sharing multicast sending device. According to the device, after the virtual machine on the sending end initiates the desktop sharing program, the multicast sending module obtains its own virtual machine address information, packs it into multicasting address information to broadcast to the multicast proxy module in the same LAN. After receiving a returned multicast networking request, the multicast sending module parses and saves the terminal addresses requesting for networking, and multicasts the shared multimedia content to the addresses in the networking list.

In order to implement the above desktop sharing multicast proxy and receiving method, there is provided a desktop sharing multicast proxy and receiving device. According to the device, after the virtual machine at the receiving end initiates the desktop sharing program, the multicast proxy module monitors the multicast address information in the same LAN and forwards it to the corresponding thin terminal through the virtual machine system. After receiving the forwarded multicasting address information, the thin terminal runs the multicast receiving module. The multicast receiving module parses the multicasting address information, packs the terminal system address and sends a networking request to the multicasting address. After the networking is successful, the multicast receiving module will directly initiate the related multimedia module to play the acquired sharing multimedia information.

Optionally, the type and definition of the desktop multicast proxy and the receiving device are described in an explicit or implicit manner.

Through the above embodiments, it is possible to overcome the excessive waste of network bandwidth in the desktop sharing process and ensure that the multicast networking terminals in the same LAN do not necessarily be presented through the virtual desktop and the shared multimedia content is played directly by the local terminal multicast receiving module. Therefore, the consumption of CPU and memory resources of the virtual machine on the receiving side can be reduced to improve the system response speed and improves the user experience.

The optional embodiments of the present disclosure will be described and illustrated below with reference to the accompanying drawings.

An embodiment of the present disclosure provides a device and method of a desktop multicast sharing device based on a thin terminal. The method is described with reference to a multicast initiation device, and includes:
The virtual machine at the sending end initiates the desktop sharing program. After the multicast sending module obtains its own virtual machine address information, the virtual machine address information then is converted into a corresponding multicasting address to save and broadcast in the LAN. According to the relevant protocol rules, if a networking request is obtained within the unit time, the networking address database is updated after the acquired networking request address is parsed. After that, the sharing multimedia information is multicast and sent to the addresses in the networking list until the sharing ends. If no networking request is received, whether to re-initiate the multicasting address broadcasting will be selected as required.

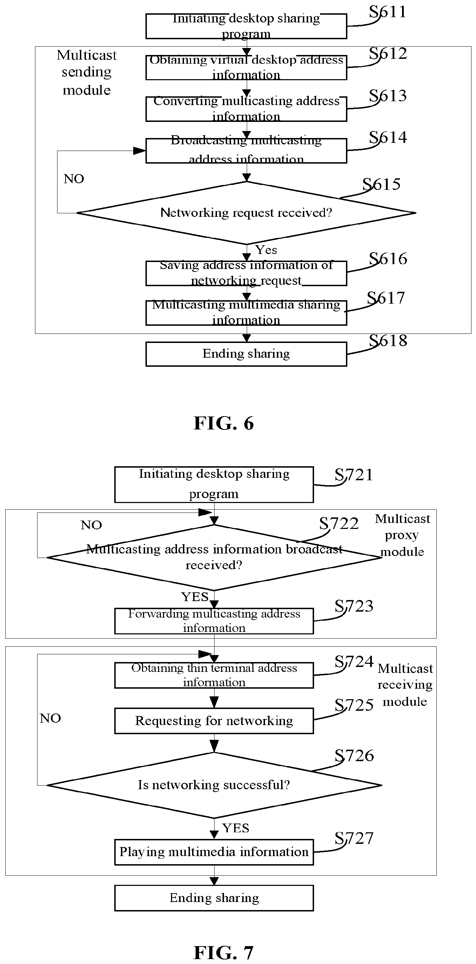

As shown in FIG. 6, the processing flow of the multicast sending device in this embodiment includes:
In step S611, a user of a virtual machine at a sending end initiates a desktop sharing program and runs the function of the multicast sending module;
In step S612, the multicast sending module obtains a system address from the virtual machine;
In step S613, the multicast sending module converts the system address into a related multicasting address according to a predetermined protocol and saves it;
In step S614, the multicast sending module initiates a broadcast and sends its own multicasting address to all addresses in the same LAN;
In step S615, the multicast sending module parses the received networking request returned from the same LAN to obtain the address information of a networking device;
In step S616, the address information of the networking device is saved in a local networking address list;
In step S617, the multicast sending module encodes the multimedia information that needs to be shared, and multicasts it to addresses in the networking list; and
In step S618, the multicast sending module ends the sharing, closes the relevant multicasting channel, and releases the resources.

An embodiment of the present disclosure provides a device and method of a desktop multicast sharing device based on a thin terminal. The method is described with reference to a multicast proxy and a receiving device and includes:
The virtual machine at the receiving end initiates the desktop sharing program. The multicast proxy module receives the broadcast of the multicasting address in the same LAN and forwards the multicasting address information to the virtual machine system. The virtual machine system transparently transmits the multicasting address information to the multicast receiving module on the thin terminal through a desktop virtualization protocol. The multicast receiving module obtains the local system address of the thin terminal packs it into a multicast networking request according to the relevant rules and sends it to the multicast sending module. After the networking is successful, the multicast receiving module will directly initiate a multimedia play module to play the acquired multicast multimedia information. If the networking fails, whether to re-initiate the networking request will be selected as required.

As shown in FIG. 7, the processing flow of the multicast proxy and receiving device in this embodiment is as follows:
In step S721, a user of a virtual machine at a receiving end initiate a desktop sharing program and runs the function of the multicast proxy module;
In step S722, the multicast proxy module receives a broadcast of multicasting address information in the same LAN, parses and saves obtained multicasting addresses;
In step S723, the multicast proxy module sends the multicasting address information to the multicast receiving module in the thin terminal through the virtual machine;
In step S724, the multicast receiving module obtains the multicasting address information to obtain the local address of the thin terminal;
In step S725, the multicast receiving module packs the thin terminal system address into a multicast networking request and sends it to the multicast sending module;
In step S726, in the case that the networking is successful, the multicast receiving module initiate a multimedia play module; and
In step S727, the multicast receiving module obtains the multimedia information, and the multimedia module directly plays the multimedia information.

An embodiment of the present disclosure provides a device and method of a desktop multicast sharing device based on a thin terminal. The method is described with reference to a block diagram of a multicast proxy and a receiving device and includes:
A multicast sending module S-MB and a multicast proxy module C-MA are all located in a virtual machine environment and start running when a user initiates desktop sharing software. The multicast sending module S-MB is responsible for broadcasting the multicasting address information to the multicast proxy module C-MA and parsing a multicast join request forwarded by the multicast proxy module; meanwhile, the multicast sending module S-MB is responsible for sending a multimedia content multicast and related state synchronization to the addresses that have joined the multicasting network. The multicast proxy module C-MA is responsible for forwarding a multicasting address broadcast and the multicast networking request. When receiving the multicasting address broadcast, the multicast proxy module forwards the broadcast to the virtual machine system. After receiving the broadcast, the virtual machine system forwards the broadcast to a corresponding terminal through the desktop virtualization protocol; when receiving the multicast networking request, the virtual machine system forwards the multicast networking request to the multicast sending module. The multicast receiving module C-MR is responsible for parsing the multicasting address information, acquiring the terminal address, packing to send it to the multicast sending module, and then using the multimedia module to directly play the acquired multimedia multicast message out of band.

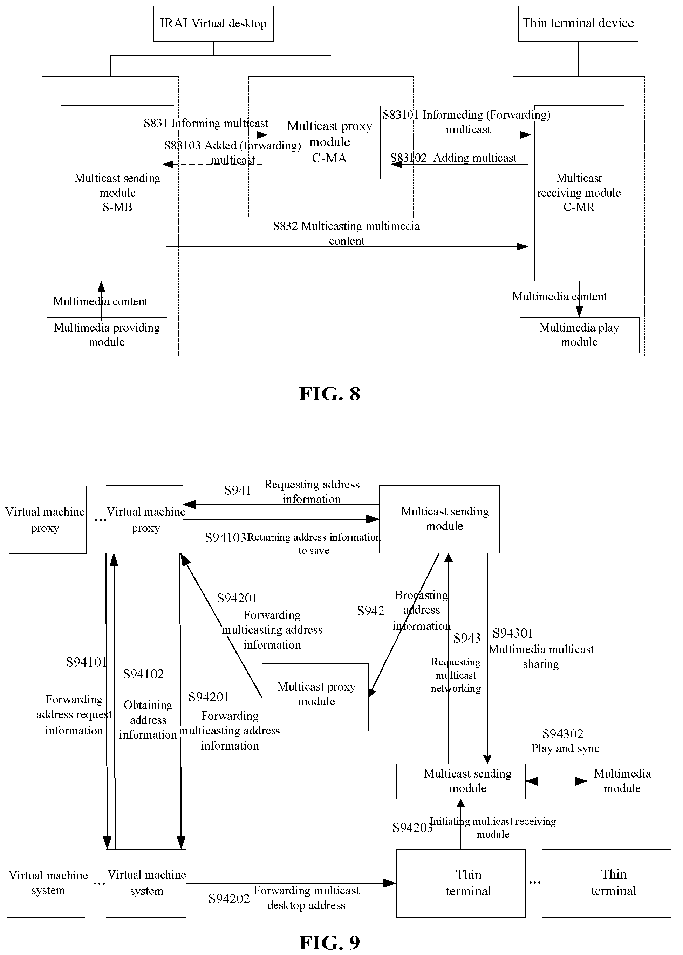

As shown in FIG. 8, a method of a desktop multicast sharing device based on a thin terminal, includes:
In step S831, the multicast sending module S-MB sends a broadcast of a multicasting address to the multicast proxy module C-MA in the same LAN;
In step S83101, the multicast proxy module C-MA forwards the broadcast of the multicasting address to the virtual machine system when receiving the broadcast, and the virtual machine system forwards the broadcast to the multicast receiving module of the corresponding terminal through the desktop virtualization protocol after receiving the broadcast;
In step S83102, the multicast receiving module C-MR is responsible for parsing the multicasting address information to obtain terminal address, and packing and sending it to the multicast proxy module;
In step S83103: The multicast proxy module C-MA forwards the multicast networking request to the multicast sending module S-MB; the multicast sending module S-MB parses the multicast join request to obtain and save the address requesting for joining the terminal; and
In step S832, the multicast sending module S-MB sends the multimedia content multicast to the addresses that have joined the multicast networking, and the multicast receiving module C-MR uses the multimedia module to directly play the acquired multimedia multicast messages out of band.

An embodiment of the present disclosure provides a method and device of a desktop multicast sharing device based on a thin terminal. The method is described with reference to a service flow of a multicast proxy and a receiving device and includes:
The multicast sending module on the sending side requests the virtual machine system for a local address through the virtual machine proxy and converts the local address into a broadcast address and broadcasts it to the LAN. After receiving the broadcast of the multicasting address, the multicast proxy module on the receiving side forwards the broadcast to the virtual machine system through the virtual proxy system; the virtual machine system forwards the broadcast to the multicast receiving module of the corresponding thin terminal through the desktop virtualization protocol. The multicast receiving module obtains the terminal address, packs it into a multicast networking request and sends the request to the multicast sending module. The multicast sending module parses the multicast joining request to obtain and save an address applying for joining the terminal and sends the multimedia content multicast to the addresses that have joined the multicast networking. The multicast receiving module runs the multimedia module to directly play the acquired multimedia multicast content out of band.

As shown in FIG. 9, a method of a desktop multicast sharing device based on a thin terminal includes:
In step S941, the multicast sending module on the sending side requests the local virtual machine proxy for the system address;
In step S94101, the virtual machine proxy forwards the address request information to the virtual machine system;
In step S94102, the virtual machine system returns address information (host address/port);
In step S94103, the virtual machine proxy transparently transmits the virtual machine address information to the multicast sending module;
In step S942, the multicast sending module converts the virtual machine address into a broadcast address to save and broadcasts the broadcast address to the LAN;
In step S94201, the multicast proxy module on the receiving side in the same LAN receives the multicasting address broadcast and forwards it to the virtual machine system through the virtual machine proxy on the receiving side;
In step S94202, the virtual machine system forwards the multicasting address to the corresponding thin terminal on the receiving side through a desktop virtualization protocol;
In step S94203, the terminal on the receiving side initiates and forwards the multicasting address information to the multicast receiving module;
In step S943, the multicast receiving module obtains an address of the thin terminal, packs it into a multicast networking request, and sends it to the multicast sending module according to the multicasting address; after receiving the networking request, the multicast sending module parses to obtain the networking request address and saves it;
In step S94301, the multicast sending module sends the multimedia content multicast to the addresses that have joined the multicast networking; and
In step S94302, the multicast receiving module uses the multimedia module to directly play the multimedia multicast message out of band until the virtual machine on the sending side closes the desktop sharing or the virtual machine on the receiving side quits the multicast receiving module.

An embodiment of the present disclosure provides a method and device of a desktop multicast sharing device based on a thin terminal. The method is described with reference to a method and device for a cloud desktop multicast sharing device, and includes:
A virtual machine environment is configured, desktop sharing software is installed on the virtual machine S-IRAI at the sending end, and on the virtual machine C-IRAI-1...C-IRAI-n at the receiving end, respectively, to ensure that the multicast sending module S-MB and the receiving multicast proxy module C-MA clients are connected to respective virtual machine proxies. The multicast sending module S-MB client is operated in the virtual machine at the sending end and the receiving proxy module C-MA client is operated in the virtual machine at receiving end. The desktop sharing software adds the S-IRAI, C-IRAI-1...C-IRAI-n virtual machines to a broadcasting group. A virtual multicasting address broadcast is sent, and transparently transmitted by the receiving-side multicast proxy module C-MA to the multicast receiving module C-MR that receives the thin clients C-T-1...C-T-n. The C-MR, so as to initiate a multicast networking request. The S-MB at the sending end multicasts audio and video streams. The multicast receiving module C-MR at the receiving ends C-T-1...C-T-n receives the multimedia information to complete the out-of-band play of the multimedia content.

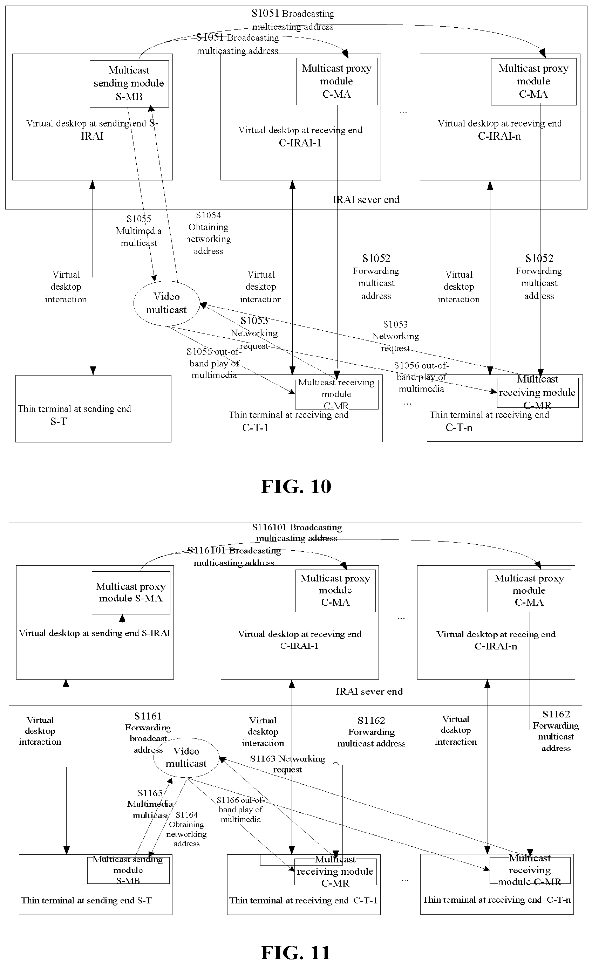

As shown in FIG. 10, a method of a desktop multicast sharing device based on a thin terminal includes:
In step S1051, the multicast sending module S-MB on the sending side S_IRAI obtains the virtual machine address, then converts it into a multicasting address to broadcast in the entire LAN;
In step S1052, the multicast proxy modules C-MAon the receiving side C-IRAI-1 to C-IRAI-n broadcast the received multicasting address and forward it to the multicast receiving modules C-MR in thin terminals C-T-1 to C-T-n on the receiving side;
In step S1053, after receiving the thin terminal address, the multicast receiving module C-MR initiates a multicast networking request to the multicast sending module S-MB;
In step S1054, the multicast sending module S-MB receives and parses the multicast networking request to obtain the corresponding thin terminal address, and saves it in the multicasting address list;
In step S1055, the multicast sending module S-MB sends the multimedia sharing content multicast to the addresses in the multicasting list; and
In step S1056, after obtaining the sharing multimedia multicast information, the multicast receiving module C-MR directly encodes and decodes by using the multimedia module at the thin terminal for an out-of-band play.

An embodiment of the present disclosure provides a method and device of a desktop multicast sharing device based on a thin terminal. The method is described with reference to a method and device for a desktop multicast sharing device of the thin terminal, and includes:
A virtual machine environment is configured, desktop sharing software is installed on the virtual machine S-IRAI at the sending end, and on the virtual machine C-IRAI-1...C-IRAI-n at the receiving end, respectively, to ensure that the multicast proxy module S-MA on the sending side and the multicast proxy module C-MA client on the receiving side are connected to respective virtual machine proxies. The multicast proxy module S-MA client on the sending side is operated and the receiving proxy module C-MA client on the receiving side is operated; the desktop sharing software adds the S-IRAI, C-IRAI-1... C-IRAI-n virtual machines to a broadcasting group. The multicast proxy module S-MA on the sending side enables the multicast sending module S-MB in the corresponding thin terminal, obtains related virtual machine addresses and thin terminal addresses, and packs them for multicasting address broadcast; the multicast proxy module C-MA on the receiving side transparently transmits it to the multicast receiving module C-MR that receives the thin clients C-T-1...C-T-n. The C-MR parses to obtain the thin terminal address on the sending side and initiates a multicast networking request. The S-MB at the sending end multicasts audio and video streams. The multicast receiving modules C-MR at the receiving ends C-T-1...C-T-n receive the multimedia information to complete the out-of-band play of the multimedia content.

As shown in FIG. 11, a method of a desktop multicast sharing device based on a thin terminal includes:
In step S1161, the multicast proxy module S-MA on the sending side S_IRAI enables the multicast sending module S-MB to obtain the thin terminal S-T address on the sending side, then converts it into a multicasting address to broadcast in the entire LAN;
In step S1162, the multicast proxy modules C-MA on the receiving side C-IRAI-1 to C-IRAI-n broadcast the received multicasting address and forward it to the multicast receiving modules C-MR in the thin terminals C-T-1 to C-T-n on the receiving side;
In step S1163, after receiving the thin terminal address, the multicast receiving module C-MR initiates a multicast networking request to the multicast sending module S-MB;
In step S1164, the multicast sending module S-MB receives and parses the multicast networking request to obtain the corresponding thin terminal address, and saves it in the multicasting address list;
In step S1165, the multicast sending module S-MB sends the multimedia sharing content multicast to the addresses in the multicasting list.
In step S1166, after obtaining the sharing multimedia multicast information, the multicast receiving module C-MR directly encodes and decodes by using the multimedia module at the thin terminal for an out-of-band play.

An embodiment of the present disclosure provides a method and device for multimedia video multicast sharing based on a thin terminal. The method is described with reference to a multicast sending module S-MB, a multicast proxy module S-MA/C-MA, and a multicast receiving module C-MR and includes:
A virtual machine environment is configured, desktop sharing software is installed on the virtual machine S-IRAI at the sending end, and on the virtual machine C-IRAI-1...C-IRAI-n at the receiving end, respectively, to ensure that the multicast proxy module S-MA/C-MA clients are connected to respective virtual machine proxies. The desktop sharing software adds the S-IRAI, C-IRAI-1 ...C-IRAI-n virtual machines to a broadcasting group. The multicast sending module S-MB is operated to pack and broadcast the multicasting addresses; the multicast proxy module C-MA on the receiving side transparently transmits it to the multicast receiving module C-MR that receives the thin clients C-T-1...C-T-n. The C-MR parses to obtain the multicasting addresses on the sending side and initiates a multicast networking request. The S-MB at the sending end multicasts related audio and video streams. The multicast receiving modules C-MR at the receiving ends C-T-1...C-T-n receive the multimedia information to complete the out-of-band play of the multimedia content.

An embodiment of the present disclosure provides a method and device for multimedia video multicast sharing based on a thin terminal. The method is described with reference to a multicast sending module S-MB, a multicast proxy module S-MA/C-MA, and a multicast receiving module C-MR and includes:
A virtual machine environment is configured, desktop sharing software is installed on the virtual machine S-IRAI at the sending end, and on the virtual machine C-IRAI-1...C-IRAI-n at the receiving end, respectively, to ensure that the multicast proxy module S-MA/C-MA clients are connected to respective virtual machine proxies. The desktop sharing software adds the S-IRAI, C-IRAI-1 ...C-IRAI-n virtual machines to a broadcasting group. The multicast sending module S-MB is operated to pack and broadcast the multicasting addresses; the multicast proxy module C-MA on the receiving side transparently transmits it to the multicast receiving module C-MR that receives the thin clients C-T-1...C-T-n. The C-MR parses to obtain the multicasting addresses on the sending side and initiates a multicast networking request. The S-MB at the sending end multicasts related audio and video streams. The multicast receiving modules C-MR at the receiving ends C-T-1...C-T-n receive the multimedia information to complete the out-of-band play of the multimedia content.

An embodiment of the present disclosure provides a method and device for desktop multicast sharing based on a thin terminal. The method is described with reference to a role switching between the multicast sending module and the multicast receiving module, and includes:
A virtual machine environment is configured, desktop sharing software is installed on the virtual machine S-IRAI at the sending end, and on the virtual machine C-IRAI-1...C-IRAI-n at the receiving end, respectively, to ensure that the multicast proxy module S-MA/C-MA clients are connected to respective virtual machine proxies. The desktop sharing software adds the S-IRAI, C-IRAI-1 ...C-IRAI-n virtual machines to a broadcasting group. The multicast sending module S-MB is operated to pack and broadcast the multicasting addresses; the multicast proxy module C-MA on the receiving side transparently transmits it to the multicast receiving module C-MR that receives the thin clients C-T-1...C-T-n. The C-MR parses to obtain the multicasting addresses on the sending side and initiates a multicast networking request. The S-MB at the sending end multicasts related audio and video streams. The multicast receiving modules C-MR at the receiving ends C-T-1...C-T-n receive the multimedia information to complete the out-of-band play of the multimedia content. Similarly, after the multicast networking is successful, the receiving end can also run the local multicast sending module S-MB to multicast the related multimedia audio streams to the sending end. After receiving the multimedia information, the sending end runs the local multicast receiving module C-MR to complete the out-of-band play of multimedia content.

The above embodiments are not all of the embodiments but are merely some of the embodiments of the present disclosure. The present disclosure is not limited to the method and device for the multicast sharing based on the thin terminal, such as desktop sharing and multimedia content sharing described in the embodiments.

In summary, according to the above embodiments or implementations of the present disclosure, by using the multicast sharing technology, the desktop sharing software is used to acquire the video stream of the virtual desktop at the sending end, and the video multicast module at the sending end and the video receiving client at receiving thin terminal join the same broadcasting group through the proxy module. When the sending end starts virtual desktop multicasting, the video stream is directly sent to the video receiving client at the receiving thin terminal for playing and completing the desktop update, without presenting on the virtual desktop at the receiving end. This operation can reduce the process and avoid a waste of the virtual machine CPU. At the same time, the physical switch can be used to transmit the video stream, thereby saving network bandwidth, making full use of the local hardware resources of the thin terminal, and achieving more efficient screen multicasting and higher resource utilization. Therefore, it is possible to achieve user-friendly and enhanced user-experience.

Obviously, those skilled in the art should understand that the above-mentioned modules or steps of the embodiments of the present disclosure may be implemented using general-purpose computing devices, which may be integrated on a single computing device or distributed in a network composed of multiple computing devices. Optionally, the modules or steps may be implemented with program code that is executable by the computing device so that they may be stored in the storage device by the computing device and, in some cases, may be performed in a different order other than the steps shown or described, or may be separately formed as integrated circuit modules or as a single integrated circuit module. In this way, the embodiments of the present disclosure are not limited to any specific combination of hardware and software.

## Claims

1. A multimedia stream multicasting method, the method comprises steps of:
broadcasting (S102), by a sending end, a multicasting address of a multimedia stream to a plurality of virtual machines within a current network;
the method being **characterized in that** it further comprises:
receiving (S104), by the sending end, a first thin terminal address of a first thin terminal corresponding to a first virtual machine within the plurality of virtual machines;
adding (S106), by the sending end, the first thin terminal address to a networking address list and multicasting the multimedia stream to thin terminal addresses within the networking address list;
receiving, by the first thin terminal, the multimedia stream; and
decoding, by the first thin terminal, the multimedia stream and updating a display screen of the first virtual machine according to a decoded multimedia stream.

2. The method according to claim 1, wherein
the step of broadcasting (S102), by the sending end, the multicasting address of the multimedia stream to the plurality of virtual machines within the current network, comprises:
broadcasting, by a second virtual machine at the sending end, a virtual machine address of the second virtual machine to the plurality of virtual machines within the current network, wherein the virtual machine address of the second virtual machine is the multicasting address, and
the step of multicasting (S106), by the sending end, the multimedia stream to the thin terminal addresses within the networking address list, comprises:
multicasting, by the second virtual machine at the sending end, the multimedia stream to the thin terminal addresses within the networking address list.

3. The method according to claim 1, wherein
the step of broadcasting (S102), by the sending end, the multicasting address of the multimedia stream to the plurality of virtual machines within the current network, comprises:
acquiring, by the second virtual machine at the sending end, a second thin terminal address of a second thin terminal corresponding to a second virtual machine; and
broadcasting, by the second virtual machine at the sending end, the second thin terminal address to the plurality of virtual machines within the current network, wherein the second thin terminal address is a multicasting address,
the step of multicasting (S106), by the sending end, the multimedia stream to the thin terminal addresses within the networking address list, comprises:
multicasting, by the second thin terminal at the sending end, the multimedia stream to the thin terminal addresses within the networking address list.

4. The method of claim 1, wherein before broadcasting (S102), by the sending end, the multicasting address of the multimedia stream to the plurality of virtual machines within the current network, the method further comprises:
initiating, by the second virtual machine at the sending end, a desktop sharing program and joining the current network through the desktop sharing program.

5. A multimedia stream multicasting method, the method comprises steps of :
monitoring (S202), by a first virtual machine at a receiving end, a broadcast within the current network to acquire a multicasting address of the multimedia stream;
the method being **characterized in that** it further comprises:
sending (S204), by the first thin terminal at the receiving end, a first thin terminal address of the first thin terminal to the multicasting address, wherein the first thin terminal is a thin terminal corresponding to the first virtual machine;
receiving (S206), by the first thin terminal at the receiving end, the multimedia stream sent from the multicasting address to the first thin terminal address; and
decoding, by the first thin terminal, the multimedia stream and updating a display screen of the first virtual machine according to a decoded multimedia stream.

6. The method according to claim 5, wherein after monitoring (S202), by the first virtual machine at the receiving end, the broadcast within the current network to acquire the multicasting address of the multimedia stream, and before sending (S204), by the first thin terminal at the receiving end, the first thin terminal address of the first thin terminal to the multicasting address, the method further comprises:
transparently transmitting, by the first virtual machine at the receiving end, the multicasting address to the first thin terminal.

7. The method according to claim 5, wherein in the case that the multicasting address is a virtual machine address of the second virtual machine at the sending end of the multimedia stream, the step of receiving (S206), by the first thin terminal at the receiving end, the multimedia stream sent from the multicasting address to the first thin terminal address, comprises:
receiving, the first thin terminal at the receiving end, the multimedia stream sent from the second virtual machine to the first thin terminal.

8. The method according to claim 5, wherein in the case that the multicasting address is a second thin terminal address of the second thin terminal corresponding to the second virtual machine at the sending end of the multimedia stream, the step of receiving (S206), by the first thin terminal at the receiving end, the multimedia stream sent from the multicasting address to the first thin terminal address, comprises:
receiving, by the first thin terminal at the receiving end, the multimedia stream sent from the second virtual machine to the first thin terminal.

9. The method according to claim 5, wherein before monitoring (S202), by the first virtual machine at a receiving end, a broadcast within the current network to acquire the multicasting address of the multimedia stream, the method further comprises:
initiating, by the first virtual machine at the receiving end, a desktop sharing program and joining the current network through the desktop sharing program.

10. A multimedia stream multicasting device, applicable to a sending end and comprising: a second virtual machine (32) including a first multicast sending module (322), **characterized in that** the first multicast sending module (322) comprises:
a broadcasting unit (3222), configured to broadcast a multicasting address of a multimedia stream to a plurality of virtual machines within a current network, wherein the multicasting address is a virtual machine address of the second virtual machine (32);
a first receiving unit (3224), configured to receive a first thin terminal address of a first thin terminal corresponding to a first virtual machine in the plurality of virtual machines; and
a first sending unit (3226), configured to add the first thin terminal address to a networking address list and multicast the multimedia stream to thin terminal addresses in the networking address list, such that the first thin terminal decodes the multimedia stream and updates a display screen of the first virtual machine according to a decoded multimedia stream.

11. The device according to claim 10, wherein the first multicast sending module (322) further comprises:
a first virtual machine access unit, configured to initiate a desktop sharing program of the second virtual machine (32) and add the second virtual machine to the current network through the desktop sharing program.

12. A multimedia stream multicasting device, applicable to a sending end and comprising: a second virtual machine (42) including a second multicast proxy module (422); and a second thin terminal (44) corresponding to the second virtual machine, **characterized in that**
the multicast proxy module (422) is configured to broadcast the multicasting address of the multimedia stream to a plurality of virtual machines in the current network, wherein the multicasting address is a second thin terminal address of the second thin terminal (44);
the second thin terminal (44) includes a second multicast sending module (442), wherein the second multicast sending module (442) includes:
a providing unit (4422), configured to provide the multicast proxy module (422) with the second thin terminal address;
a second receiving unit (4424), configured to receive a first thin terminal address of the first thin terminal corresponding to the first virtual machine within the plurality of virtual machines; and
a second sending unit (4426), configured to add the first thin terminal address to the networking address list and multicast the multimedia stream to thin terminal addresses within the networking address list, such that the first thin terminal decodes the multimedia stream and updates a display screen of the first virtual machine according to a decoded multimedia stream.

13. A multimedia stream multicasting device, applicable to a receiving end and comprising: a first virtual machine (52) including a first multicast proxy module (522); and a first thin terminal (54) corresponding to the first virtual machine (52), **characterized in that**
the first multicast proxy module (522) is configured to monitor the broadcast within the current network to acquire a multicasting address of the multimedia stream; and
the first thin terminal (54) comprises a multicast receiving module (542), wherein the multicast receiving module (542) includes:
a third sending unit (5422), configured to send a first thin terminal address of the first thin terminal (54) to the multicasting address; and
a third receiving unit (5424), configured to receive the multimedia stream sent from the multicasting address to the first thin terminal address, such that the first thin terminal decodes the multimedia stream and updates a display screen of the first virtual machine according to a decoded multimedia stream.

## Patentansprüche

1. Multimedia-Stream-Multicast-Verfahren, wobei das Verfahren folgende Schritte umfasst:
Broadcasten (S102), durch ein Sendeende, einer Multicast-Adresse eines Multimedia-Streams an eine Vielzahl von virtuellen Maschinen innerhalb eines aktuellen Netzwerks;
wobei das Verfahren **dadurch gekennzeichnet ist, dass** es weiter Folgendes umfasst:
Empfangen (S104), durch das Sendeende, einer Adresse eines ersten schlanken Endgeräts eines einer ersten virtuellen Maschine innerhalb der Vielzahl von virtuellen Maschinen entsprechenden ersten schlanken Endgeräts;
Hinzufügen (S106), durch das Sendeende, der Adresse des ersten schlanken Endgeräts zu einer Liste von Netzwerkadressen und Multicasten des Multimedia-Streams zu Adressen schlanker Endgeräte innerhalb der Liste von Netzwerkadressen;
Empfangen, durch das erste schlanke Endgerät, des Multimedia-Streams; und
Dekodieren, durch das erste schlanke Endgerät, des Multimedia-Streams und Aktualisieren eines Anzeigebildschirms der ersten virtuellen Maschine gemäß einem dekodierten Multimedia-Stream.

2. Verfahren gemäß Anspruch 1, wobei
der Schritt des Broadcastens (S102), durch das Sendeende, der Multicast-Adresse des Multimedia-Streams an die Vielzahl von virtuellen Maschinen innerhalb des aktuellen Netzwerks Folgendes umfasst:
Broadcasten, durch eine zweite virtuelle Maschine am Sendeende, einer Adresse einer virtuellen Maschine der zweiten virtuellen Maschine an die Vielzahl von virtuellen Maschinen innerhalb des aktuellen Netzwerks, wobei die Adresse einer virtuellen Maschine der zweiten virtuellen Maschine die Multicast-Adresse ist, und
der Schritt des Multicastens (S106), durch das Sendeende, des Multimedia-Streams an die Adressen schlanker Endgeräte innerhalb der Liste von Netzwerkadressen Folgendes umfasst:
Multicasten, durch die zweite virtuelle Maschine am Sendeende, des Multimedia-Streams an die Adressen schlanker Endgeräte innerhalb der Liste von Netzwerkadressen.

3. Verfahren gemäß Anspruch 1, wobei
der Schritt des Broadcastens (S102), durch das Sendeende, der Multicast-Adresse des Multimedia-Streams an die Vielzahl von virtuellen Maschinen innerhalb des aktuellen Netzwerks Folgendes umfasst:
Erfassen, durch die zweite virtuelle Maschine am Sendeende, einer Adresse eines zweiten schlanken Endgeräts eines einer zweiten virtuellen Maschine entsprechenden zweiten schlanken Endgeräts; und
Broadcasten, durch die zweite virtuelle Maschine am Sendeende, der Adresse des zweiten schlanken Endgeräts an die Vielzahl von virtuellen Maschinen innerhalb des aktuellen Netzwerks, wobei die Adresse des zweiten schlanken Endgeräts eine Multicast-Adresse ist,
der Schritt des Multicastens (S106), durch das Sendeende, des Multimedia-Streams an die Adressen schlanker Endgeräte innerhalb der Liste von Netzwerkadressen Folgendes umfasst:
Multicasten, durch das zweite schlanke Endgerät am Sendeende, des Multimedia-Streams an die Adressen schlanker Endgeräte innerhalb der Liste von Netzwerkadressen.

4. Verfahren gemäß Anspruch 1, wobei das Verfahren vor dem Broadcasten (S102), durch das Sendeende, der Multicast-Adresse des Multimedia-Streams an die Vielzahl von virtuellen Maschinen innerhalb des aktuellen Netzwerks weiter Folgendes umfasst:
Initiieren, durch die zweite virtuelle Maschine am Sendeende, eines Desktop-Sharing-Programms und Beitreten zum aktuellen Netzwerk durch das Desktop-Sharing-Programm.

5. Multimedia-Stream-Multicast-Verfahren, wobei das Verfahren folgende Schritte umfasst:
Überwachen (S202), durch eine erste virtuelle Maschine am Empfangsende, eines Broadcasts innerhalb des aktuellen Netzwerks, um eine Multicast-Adresse des Multimedia-Streams zu erfassen;
wobei das Verfahren **dadurch gekennzeichnet ist, dass** es weiter Folgendes umfasst:
Senden (S204), durch das erste schlanke Endgerät am Empfangsende, einer Adresse eines ersten schlanken Endgeräts des ersten schlanken Endgeräts an die Multicast-Adresse, wobei das erste schlanke Endgerät ein der ersten virtuellen Maschine entsprechendes schlankes Endgerät ist;
Empfangen (S206), durch das erste schlanke Endgerät am Empfangsende, des Multimedia-Streams, der von der Multicast-Adresse zur Adresse des ersten schlanken Endgeräts gesendet wurde; und
Dekodieren, durch das erste schlanke Endgerät, des Multimedia-Streams und Aktualisieren eines Anzeigebildschirms der ersten virtuellen Maschine gemäß einem dekodierten Multimedia-Stream.

6. Verfahren gemäß Anspruch 5, wobei das Verfahren nach dem Überwachen (S202), durch die erste virtuelle Maschine am Empfangsende, des Broadcasts innerhalb des aktuellen Netzwerks, um die Multicast-Adresse des Multimedia-Streams zu erfassen, und vor dem Senden (S204), durch das erste schlanke Endgerät am Empfangsende, der Adresse eines ersten schlanken Endgeräts des ersten schlanken Endgeräts an die Multicast-Adresse weiter Folgendes umfasst:
transparentes Übertragen, durch die erste virtuelle Maschine am Empfangsende, der Multicast-Adresse an das erste schlanke Endgerät.

7. Verfahren gemäß Anspruch 5, wobei in dem Fall, dass die Multicast-Adresse eine Adresse einer virtuellen Maschine der zweiten virtuellen Maschine am Sendeende des Multimedia-Streams ist, der Schritt des Empfangens (S206), durch das erste schlanke Endgerät am Empfangsende, des Multimedia-Streams, der von der Multicast-Adresse zur Adresse des ersten schlanken Endgeräts gesendet wurde, Folgendes umfasst:
Empfangen, durch das erste schlanke Endgerät am Empfangsende, des Multimedia-Streams, der von der zweiten virtuellen Maschine zum ersten schlanken Endgerät gesendet wurde.

8. Verfahren gemäß Anspruch 5, wobei in dem Fall, dass die Multicast-Adresse eine Adresse eines zweiten schlanken Endgeräts des der zweiten virtuellen Maschine entsprechenden zweiten schlanken Endgeräts am Sendeende des Multimedia-Streams ist, der Schritt des Empfangens (S206), durch das erste schlanke Endgerät am Empfangsende, des Multimedia-Streams, der von der Multicast-Adresse zur Adresse des ersten schlanken Endgeräts gesendet wurde, Folgendes umfasst:
Empfangen, durch das erste schlanke Endgerät am Empfangsende, des Multimedia-Streams, der von der zweiten virtuellen Maschine zum ersten schlanken Endgerät gesendet wurde.

9. Verfahren gemäß Anspruch 5, wobei das Verfahren vor dem Überwachen (S202), durch die erste virtuelle Maschine am Empfangsende, eines Broadcasts innerhalb des aktuellen Netzwerks, um die Multicast-Adresse des Multimedia-Streams zu erfassen weiter Folgendes umfasst:
Initiieren, durch die erste virtuelle Maschine am Empfangsende, eines Desktop-Sharing-Programms und Beitreten zum aktuellen Netzwerk durch das Desktop-Sharing-Programm.

10. Multimedia-Stream-Multicast-Vorrichtung, die auf ein Sendeende anwendbar ist und Folgendes umfasst: eine zweite virtuelle Maschine (32), die ein erstes Multicast-Sendemodul (322) einschließt, **dadurch gekennzeichnet, dass** das erste Multicast-Sendemodul (322) Folgendes umfasst:
eine Broadcast-Einheit (3222), die ausgebildet ist, um eine Multicast-Adresse eines Multimedia-Streams an eine Vielzahl von virtuellen Maschinen innerhalb eines aktuellen Netzwerks zu broadcasten, wobei die Multicast-Adresse eine Adresse einer virtuellen Maschine der zweiten virtuellen Maschine (32) ist;
eine erste Empfangseinheit (3224), die so ausgebildet ist, dass sie eine Adresse eines ersten schlanken Endgeräts eines einer ersten virtuellen Maschine innerhalb der Vielzahl von virtuellen Maschinen entsprechenden ersten schlanken Endgeräts empfängt; und
eine erste Sendeeinheit (3226), die so ausgebildet ist, dass sie die Adresse des ersten schlanken Endgeräts zu einer Liste von Netzwerkadressen hinzufügt und den Multimedia-Stream zu Adressen schlanker Endgeräte innerhalb der Liste von Netzwerkadressen multicastet, so dass das erste schlanke Endgerät den Multimedia-Stream dekodiert und einen Anzeigebildschirm der ersten virtuellen Maschine gemäß einem dekodierten Multimedia-Stream aktualisiert.

11. Vorrichtung gemäß Anspruch 10, wobei das erste Multicast-Sendemodul (322) weiter Folgendes umfasst:
eine erste Zugriffseinheit für eine virtuelle Maschine, die so ausgebildet ist, dass sie ein Desktop-Sharing-Programm der zweiten virtuellen Maschine (32) initiiert und die zweite virtuelle Maschine über das Desktop-Sharing-Programm dem aktuellen Netzwerk hinzufügt.

12. Multimedia-Stream-Multicast-Vorrichtung, die auf ein Sendeende anwendbar ist und Folgendes umfasst: eine zweite virtuelle Maschine (42), die ein zweites Multicast-Proxymodul (422) einschließt; und ein zweites schlankes Endgerät (44), das der zweiten virtuellen Maschine entspricht, **dadurch gekennzeichnet, dass**
das Multicast-Proxymodul (422) ausgebildet ist, um die Multicast-Adresse des Multimedia-Streams an eine Vielzahl von virtuellen Maschinen in dem aktuellen Netzwerk zu broadcasten, wobei die Multicast-Adresse eine Adresse eines zweiten schlanken Endgeräts des zweiten schlanken Endgeräts (44) ist;
das zweite schlanke Endgerät (44) ein zweites Multicast-Sendemodul (442) einschließt, wobei das zweite Multicast-Sendemodul (442) Folgendes einschließt:
eine Bereitstellungseinheit (4422), die so ausgebildet ist, dass sie dem Multicast-Proxymodul (422) die Adresse des zweiten schlanken Endgeräts bereitstellt;
eine zweite Empfangseinheit (4424), die so ausgebildet ist, dass sie eine Adresse eines ersten schlanken Endgeräts des der ersten virtuellen Maschine innerhalb der Vielzahl von virtuellen Maschinen entsprechenden ersten schlanken Endgeräts empfängt;
und eine zweite Sendeeinheit (4426), die so ausgebildet ist, dass sie die Adresse des ersten schlanken Endgeräts zur Liste von Netzwerkadressen hinzufügt und den Multimedia-Stream zu Adressen schlanker Endgeräte innerhalb der Liste von Netzwerkadressen multicastet, so dass das erste schlanke Endgerät den Multimedia-Stream dekodiert und einen Anzeigebildschirm der ersten virtuellen Maschine gemäß einem dekodierten Multimedia-Stream aktualisiert.

13. Multimedia-Stream-Multicast-Vorrichtung, die auf ein Empfangsende anwendbar ist und Folgendes umfasst: eine erste virtuelle Maschine (52), die ein erstes Multicast-Proxymodul (522) einschließt; und ein erstes schlankes Endgerät (54), das der ersten virtuellen Maschine (52) entspricht, **dadurch gekennzeichnet, dass**
das erste Multicast-Proxymodul (522) so ausgebildet ist, dass es den Broadcast innerhalb des aktuellen Netzwerks überwacht, um eine Multicast-Adresse des Multimedia-Streams zu erfassen; und
das erste schlanke Endgerät (54) ein Multicast-Empfangsmodul (542) umfasst, wobei das Multicast-Empfangsmodul (542) Folgendes einschließt:
eine dritte Sendeeinheit (5422), die so ausgebildet ist, dass sie eine Adresse eines ersten schlanken Endgeräts des ersten schlanken Endgeräts (54) an die Multicast-Adresse sendet; und
eine dritte Empfangseinheit (5424), die so ausgebildet ist, dass sie den Multimedia-Stream empfängt, der von der Multicast-Adresse zur Adresse des ersten schlanken Endgeräts gesendet wurde, so dass das erste schlanke Endgerät den Multimedia-Stream dekodiert und einen Anzeigebildschirm der ersten virtuellen Maschine gemäß einem dekodierten Multimedia-Stream aktualisiert.

## Revendications

1. Un procédé de multidiffusion de flux multimédia, le procédé comprend les étapes consistant à :
diffuser (S102), par une extrémité d'envoi, une adresse de multidiffusion d'un flux multimédia à une pluralité de machines virtuelles à l'intérieur d'un réseau actuel ;
le procédé étant **caractérisé en ce qu'**il comprend en outre :
la réception (S104), par l'extrémité d'envoi, d'une première adresse de terminal mince d'un premier terminal mince correspondant à une première machine virtuelle à l'intérieur de la pluralité de machines virtuelles ;
l'ajout (S106), par l'extrémité d'envoi, de la première adresse de terminal mince à une liste d'adresses de réseautage et la multidiffusion du flux multimédia à des adresses de terminal mince à l'intérieur de la liste d'adresses de réseautage ;
la réception, par le premier terminal mince, du flux multimédia ; et
le décodage, par le premier terminal mince, du flux multimédia et la mise à jour d'un écran d'affichage de la première machine virtuelle selon un flux multimédia décodé.

2. Le procédé selon la revendication 1, dans lequel
l'étape consistant à diffuser (S102), par l'extrémité d'envoi, l'adresse de multidiffusion du flux multimédia à la pluralité de machines virtuelles à l'intérieur du réseau actuel, comprend :
la diffusion, par une deuxième machine virtuelle au niveau de l'extrémité d'envoi, d'une adresse de machine virtuelle de la deuxième machine virtuelle à la pluralité de machines virtuelles à l'intérieur du réseau actuel, dans lequel l'adresse de machine virtuelle de la deuxième machine virtuelle est l'adresse de multidiffusion, et
l'étape consistant à multidiffuser (S106), par l'extrémité d'envoi, le flux multimédia aux adresses de terminal mince à l'intérieur de la liste d'adresses de réseautage, comprend :
la multidiffusion, par la deuxième machine virtuelle au niveau de l'extrémité d'envoi, du flux multimédia aux adresses de terminal mince à l'intérieur de la liste d'adresses de réseautage.

3. Le procédé selon la revendication 1, dans lequel
l'étape consistant à diffuser (S102), par l'extrémité d'envoi, l'adresse de multidiffusion du flux multimédia à la pluralité de machines virtuelles à l'intérieur du réseau actuel, comprend :
l'acquisition, par la deuxième machine virtuelle au niveau de l'extrémité d'envoi, d'une deuxième adresse de terminal mince d'un deuxième terminal mince correspondant à une deuxième machine virtuelle ; et
la diffusion, par la deuxième machine virtuelle au niveau de l'extrémité d'envoi, de la deuxième adresse de terminal mince à la pluralité de machines virtuelles à l'intérieur du réseau actuel, dans lequel la deuxième adresse de terminal mince est une adresse de multidiffusion,
l'étape consistant à multidiffuser (S106), par l'extrémité d'envoi, le flux multimédia aux adresses de terminal mince à l'intérieur de la liste d'adresses de réseautage, comprend :
la multidiffusion, par le deuxième terminal mince au niveau de l'extrémité d'envoi, du flux multimédia aux adresses de terminal mince à l'intérieur de la liste d'adresses de réseautage.

4. Le procédé de la revendication 1, dans lequel avant la diffusion (S102), par l'extrémité d'envoi, de l'adresse de multidiffusion du flux multimédia à la pluralité de machines virtuelles à l'intérieur du réseau actuel, le procédé comprend en outre :
le lancement, par la deuxième machine virtuelle au niveau de l'extrémité d'envoi, d'un programme de partage de bureau et le fait de rejoindre le réseau actuel par le biais du programme de partage de bureau.

5. Un procédé de multidiffusion de flux multimédia, le procédé comprend les étapes consistant à :
surveiller (S202), par une première machine virtuelle au niveau d'une extrémité de réception, une diffusion à l'intérieur du réseau actuel pour acquérir une adresse de multidiffusion du flux multimédia ;
le procédé étant **caractérisé en ce qu'**il comprend en outre :
l'envoi (S204), par le premier terminal mince au niveau de l'extrémité de réception, d'une première adresse de terminal mince du premier terminal mince à l'adresse de multidiffusion, dans lequel le premier terminal mince est un terminal mince correspondant à la première machine virtuelle ;
la réception (S206), par le premier terminal mince au niveau de l'extrémité de réception, du flux multimédia envoyé depuis l'adresse de multidiffusion à la première adresse de terminal mince ; et
le décodage, par le premier terminal mince, du flux multimédia et la mise à jour d'un écran d'affichage de la première machine virtuelle selon un flux multimédia décodé.

6. Le procédé selon la revendication 5, dans lequel après la surveillance (S202), par la première machine virtuelle au niveau de l'extrémité de réception, de la diffusion à l'intérieur du réseau actuel pour acquérir l'adresse de multidiffusion du flux multimédia, et avant l'envoi (S204), par le premier terminal mince au niveau de l'extrémité de réception, de la première adresse de terminal mince du premier terminal mince à l'adresse de multidiffusion, le procédé comprend en outre :
la transmission transparente, par la première machine virtuelle au niveau de l'extrémité de réception, de l'adresse de multidiffusion au premier terminal mince.

7. Le procédé selon la revendication 5, dans lequel dans le cas où l'adresse de multidiffusion est une adresse de machine virtuelle de la deuxième machine virtuelle au niveau de l'extrémité d'envoi du flux multimédia, l'étape de réception (S206), par le premier terminal mince au niveau de l'extrémité de réception, du flux multimédia envoyé depuis l'adresse de multidiffusion à la première adresse de terminal mince, comprend :
la réception, par le premier terminal mince au niveau de l'extrémité de réception, du flux multimédia envoyé depuis la deuxième machine virtuelle au premier terminal mince.

8. Le procédé selon la revendication 5, dans lequel dans le cas où l'adresse de multidiffusion est une deuxième adresse de terminal mince du deuxième terminal mince correspondant à la deuxième machine virtuelle au niveau de l'extrémité d'envoi du flux multimédia, l'étape consistant à recevoir (S206), par le premier terminal mince au niveau de l'extrémité de réception, le flux multimédia envoyé depuis l'adresse de multidiffusion à la première adresse de terminal mince, comprend :
la réception, par le premier terminal mince au niveau de l'extrémité de réception, du flux multimédia envoyé depuis la deuxième machine virtuelle au premier terminal mince.

9. Le procédé selon la revendication 5, dans lequel avant la surveillance (S202), par la première machine virtuelle au niveau d'une extrémité de réception, d'une diffusion à l'intérieur du réseau actuel pour acquérir l'adresse de multidiffusion du flux multimédia, le procédé comprend en outre :
le lancement, par la première machine virtuelle au niveau de l'extrémité de réception, d'un programme de partage de bureau et le fait de rejoindre le réseau actuel par le biais du programme de partage de bureau.

10. Un dispositif de multidiffusion de flux multimédia, applicable à une extrémité d'envoi et comprenant : une deuxième machine virtuelle (32) incluant un premier module d'envoi par multidiffusion (322), **caractérisé en ce que** le premier module d'envoi par multidiffusion (322) comprend :
une unité de diffusion (3222), configurée pour diffuser une adresse de multidiffusion d'un flux multimédia à une pluralité de machines virtuelles à l'intérieur d'un réseau actuel, dans lequel l'adresse de multidiffusion est une adresse de machine virtuelle de la deuxième machine virtuelle (32) ;
une première unité de réception (3224), configurée pour recevoir une première adresse de terminal mince d'un premier terminal mince correspondant à une première machine virtuelle dans la pluralité de machines virtuelles ; et
une première unité d'envoi (3226), configurée pour ajouter la première adresse de terminal mince à une liste d'adresses de réseautage et multidiffuser le flux multimédia à des adresses de terminal mince dans la liste d'adresses de réseautage, de telle sorte que le premier terminal mince décode le flux multimédia et mette à jour un écran d'affichage de la première machine virtuelle selon un flux multimédia décodé.

11. Le dispositif selon la revendication 10, dans lequel le premier module d'envoi par multidiffusion (322) comprend en outre :
une première unité d'accès d'une machine virtuelle, configurée pour lancer un programme de partage de bureau de la deuxième machine virtuelle (32) et ajouter la deuxième machine virtuelle au réseau actuel par le biais du programme de partage de bureau.

12. Un dispositif de multidiffusion de flux multimédia, applicable à une extrémité d'envoi et comprenant : une deuxième machine virtuelle (42) incluant un deuxième module mandataire de multidiffusion (422) ; et un deuxième terminal mince (44) correspondant à la deuxième machine virtuelle, **caractérisé en ce que**
le module mandataire de multidiffusion (422) est configuré pour diffuser l'adresse de multidiffusion du flux multimédia à une pluralité de machines virtuelles dans le réseau actuel, dans lequel l'adresse de multidiffusion est une deuxième adresse de terminal mince du deuxième terminal mince (44) ;
le deuxième module mince (44) inclut un deuxième module d'envoi par multidiffusion (442), dans lequel le deuxième module d'envoi par multidiffusion (442) inclut :
une unité de fourniture (4422), configurée pour fournir au module mandataire de multidiffusion (422) la deuxième adresse de terminal mince ;
une deuxième unité de réception (4424), configurée pour recevoir une première adresse de terminal mince du premier terminal mince correspondant à la première machine virtuelle à l'intérieur de la pluralité de machines virtuelles ; et
une deuxième unité d'envoi (4426), configurée pour ajouter la première adresse de terminal mince à la liste d'adresses de réseautage et multidiffuser le flux multimédia à des adresses de terminal mince à l'intérieur de la liste d'adresses de réseautage, de telle sorte que le premier terminal mince décode le flux multimédia et mette à jour un écran d'affichage de la première machine virtuelle selon un flux multimédia décodé.

13. Un dispositif de multidiffusion de flux multimédia, applicable à une extrémité de réception et comprenant : une première machine virtuelle (52) comprenant un premier module mandataire de multidiffusion (522) ; et un premier terminal mince (54) correspondant à la première machine virtuelle (52), **caractérisé en ce que**
le premier module mandataire de multidiffusion (522) est configuré pour surveiller la diffusion à l'intérieur du réseau actuel pour acquérir une adresse de multidiffusion du flux multimédia ; et
le premier terminal mince (54) comprend un module de réception de multidiffusion (542), dans lequel le module de réception par multidiffusion (542) inclut :
une troisième unité d'envoi (5422), configurée pour envoyer une première adresse de terminal mince du premier terminal mince (54) à l'adresse de multidiffusion ; et
une troisième unité de réception (5424), configurée pour recevoir le flux multimédia envoyé depuis l'adresse de multidiffusion à la première adresse de terminal mince, de telle sorte que le premier terminal mince décode le flux multimédia et mette à jour un écran d'affichage de la première machine virtuelle selon un flux multimédia décodé.
